(19) Europäisches Patentamt
European Patent Office
Office européen des brevets

(11) **EP 2 159 980 B1**

(12) **EUROPEAN PATENT SPECIFICATION**

(45) Date of publication and mention
of the grant of the patent:
**15.02.2012 Bulletin 2012/07**

(51) Int Cl.:
***H04L 27/26*** (2006.01)

(21) Application number: **09007674.6**

(22) Date of filing: **10.06.2009**

(54) **Apparatus and method for receiving orthogonal frequency division multiplexed signals**

Vorrichtung und Verfahren zum Empfang von orthogonalen Frequenzmultiplexsignalen

Appareil et procédé de réception de signaux multiplexés à division de fréquence orthogonale

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **01.09.2008 JP 2008223606**

(43) Date of publication of application:
**03.03.2010 Bulletin 2010/09**

(73) Proprietor: **Mitsubishi Electric Corporation Tokyo 100-8310 (JP)**

(72) Inventors:
• **Ido, Jun
Tokyo 100-8310 (JP)**

• **Takeuchi, Mitsuru
Tokyo 100-8310 (JP)**

(74) Representative: **HOFFMANN EITLE
Patent- und Rechtsanwälte
Arabellastraße 4
81925 München (DE)**

(56) References cited:
**US-A1- 2002 196 880**

• **Harry Newton: "Newton's Telecom Dictionary", 25 March 2006 (2006-03-25), Flatiron Publishing, New York ISBN: 1578203198 pages 291-291,**

**Description**

BACKGROUND OF THE INVENTION

Field of the Invention

The present invention relates to an orthogonal frequency division multiplexed signal receiving apparatus and a receiving method thereof and, in particular, relates to such a receiving apparatus that receives an orthogonal frequency division multiplexed signal that includes a plurality of known pilot carriers and a method thereof.

Description of the Background Art

A digital transmission technique using an orthogonal frequency division multiplexing scheme is a transmission scheme for transmitting and receiving information by modulating and multiplexing the information with a plurality of subcarriers that have mutually orthogonal frequencies. Such a technique is becoming commercially practical, in particular, in the fields of broadcasting and communications.

For transmission using an orthogonal frequency division multiplexing scheme, information to be transmitted (hereinafter also referred to as "transmission data") is allocated among a plurality of subcarriers, in each of which transmission data is modulated in digital form with QPSK (Quadrature Phase Shift Keying), QAM (Quadrature Amplitude Modulation), or multilevel PSK, etc. As signals used for modulating subcarriers on the receiver side, known signals (or pilot carriers) are multiplexed as specific subcarriers. Those multiplexed subcarriers are orthogonally transformed by the inverse discrete Fourier transform and frequency-translated to a desired transmit frequency for transmission.

More specifically, transmission data transmitted during transmission is mapped according to a modulation scheme for each subcarrier and subjected to the inverse discrete Fourier transform. Then, the lattermost end of such an inverse-discrete-Fourier transformed signal is copied to the leading end of the same signal. This part of the signal is called a guard interval. The addition of such a guard interval allows a signal to be reproduced without any intersymbolic interference on the receiver side, even in the presence of a delay wave that has a delay time equivalent to a guard interval length or shorter.

In the orthogonal frequency division multiplexing, all subcarriers are orthogonal to one another, so that transmission data can be reproduced properly when subcarrier-frequency synchronization is achieved between the transmitter and the receiver. Thus, a demodulator (or receiving apparatus) that receives an orthogonal frequency division multiplexed signal (hereinafter also referred to as an "OFDM signal") performs demodulation in such a manner as to orthogonally demodulate an input OFDM complex digital signal so that the signal is frequency-translated to a desired frequency band and then transforming the frequency-translated receiving signal with the discrete Fourier transform to generate a receiving signal for each subcarrier, while achieving both timing and subcarrier-frequency synchronization between the transmitter and the receiver.

In a conventional receiving apparatus that adopts a subcarrier modulation scheme such as QPSK or QAM and receives an orthogonal frequency division multiplexed signal, for the demodulation of each subcarrier, the amplitude and phase-shift amount of each subcarrier on a channel, for example, are estimated using known signals (or pilot carriers) that have previously been inserted in a transmit signal (this estimation is hereinafter also referred to as "channel estimation") and, based on the result of estimation, the amplitude and phase of each subcarrier are corrected (this correction is hereinafter also referred to as "equalization") (cf., Itami, Makoto. "Easy-to-Understand OFDM Technology": Ohmsha, Ltd.: 39-44, 71-82; hereinafter referred to as "Non-Patent Document 1.")

A technique relevant to this is also disclosed in Japanese Patent Application Laid-Open No. 2000-236313 (hereinafter referred to as "Patent Document 1.")

In a conventional receiving apparatus, since transmission data is reproduced based on a demodulated signal that is obtained by such channel estimation and equalization, it is important to maintain the accuracy of such channel estimation in order to regenerate transmission data without causing any errors. The number of pilot carriers to be used for such channel estimation is limited to a minimum required number in order to increase the amount of data that can be transmitted as much as possible. For instance, according to digital terrestrial broadcasting transmission standards such as ISDB-T (Integrated Services Digital Broadcasting-Terrestrial) or DVB-T (Digital Video Broadcasting-Terrestrial), etc., within a single symbol of an OFDM signal, pilot carriers are inserted at intervals of twelve carriers in a frequency direction; besides, a subcarrier frequency at which a pilot carrier is inserted is shifted by three carriers for each symbol. Thus, pilot carriers are inserted at intervals of four symbols in subcarriers of the same frequency.

Now, when an OFDM signal is received on the move, such channel estimation needs to follow a change in channel characteristics associated with such movement. Thus, as described in the above Non-Patent Document 1, channel estimation is performed by interpolating pilot carriers in both time and frequency directions in order to follow a change in the channel.

The accuracy of such channel estimation, however, will deteriorate with increasing travel speed; thus, there is a problem in that, at the time of data receipt when moving fast, amplitude or phase cannot be corrected properly even after equalization, which results in a high probability that transmission data will be regenerated in error.

In addition to the above, US 2002/0196880 Al discloses a method for implementing multi-tone receivers. The respective teaching is concerned with reducing phase jitter in a orthogonal frequency division multiplexed (OFDM) signal.

SUMMARY OF THE INVENTION

It is an object of the present invention to provide an orthogonal frequency division multiplexed signal receiving apparatus, and a receiving method thereof, that is capable of compensating for channel estimation errors that occur at the time of data receipt when moving fast and thereby properly reproducing transmission data.

The above object is met by the subject-matter of the independent claims. Further preferred embodiments are defined in the dependent claims.

Such subject-matter may reduce the influence of possible channel estimation errors that may occur due to the receipt of signals when moving fast, thereby improving the receiving performance.

Other objects, features, aspects and advantages of the present invention will become more apparent from the following detailed description of the present invention when taken in conjunction with the accompanying drawings.

BRIEF DESCRIPTION OF THE DRAWINGS

   FIG. 1 illustrates a configuration of an orthogonal frequency division multiplexed signal receiving apparatus according to a first preferred embodiment of the present invention.

   FIG. 2 illustrates the output signals of an equalization unit and a memory unit in the orthogonal frequency division multiplexed signal receiving apparatus according to the first preferred embodiment of the present invention.

   FIG. 3 illustrates a configuration of an orthogonal frequency division multiplexed signal receiving apparatus according to a second preferred embodiment of the present invention.

   FIG. 4 illustrates a configuration of a second coefficient update unit in the orthogonal frequency division multiplexed signal receiving apparatus according to the second preferred embodiment of the present invention.

   FIG. 5 illustrates a configuration of an orthogonal frequency division multiplexed signal receiving apparatus according to a third preferred embodiment of the present invention.

DESCRIPTION OF THE PREFERRED EMBODIMENTS

First Preferred Embodiment

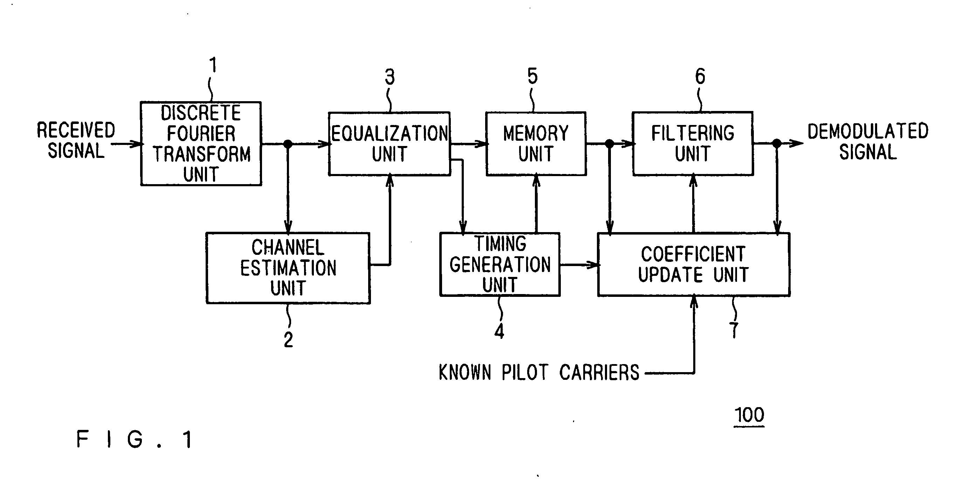

FIG. 1 illustrates a configuration of an orthogonal frequency division multiplexed signal receiving apparatus 100 according to a first preferred embodiment of the present invention. The receiving apparatus 100 includes a discrete Fourier transform unit 1, a channel estimation unit 2, an equalization unit 3, a timing generation unit 4, a memory unit 5, a filtering unit 6, and a coefficient update unit 7.

Now, the operation of the apparatus 100 is described. A received orthogonal frequency division multiplexed signal is translated to a desired frequency, and then is transformed by the discrete Fourier transform in the discrete Fourier transform unit 1 and separated into subcarrier components (or demodulated into a sequence of subcarriers).

The channel estimation unit 2 extracts pilot carriers from the output of the discrete Fourier transform unit 1 and outputs channel estimated values for all subcarriers.

The equalization unit 3 corrects, based on the output of the channel estimation unit 2, the phase and amplitude of each subcarrier that is output from the discrete Fourier transform unit 1 and outputs the resultant signal as an equalized signal. This operation is an already well-known technique (cf., Non-Patent Document 1 and Patent Document 1), so that the detailed description thereof is omitted herein. The equalization unit 3 also outputs a header signal that represents a symbol period for an OFDM signal in synchronization with the equalized signal. It is noted herein that such equalized output is output in ascending order of frequency of subcarrier components so that the last OFDM symbol is the subcarrier component that has the highest frequency.

Based on the header signal that is output from the equalization unit 3, the timing generation unit 4 generates a timing signal that is used for controlling the timing of the operation of the memory unit 5 and a coefficient update timing signal that is used for controlling the operation of the coefficient update unit 7.

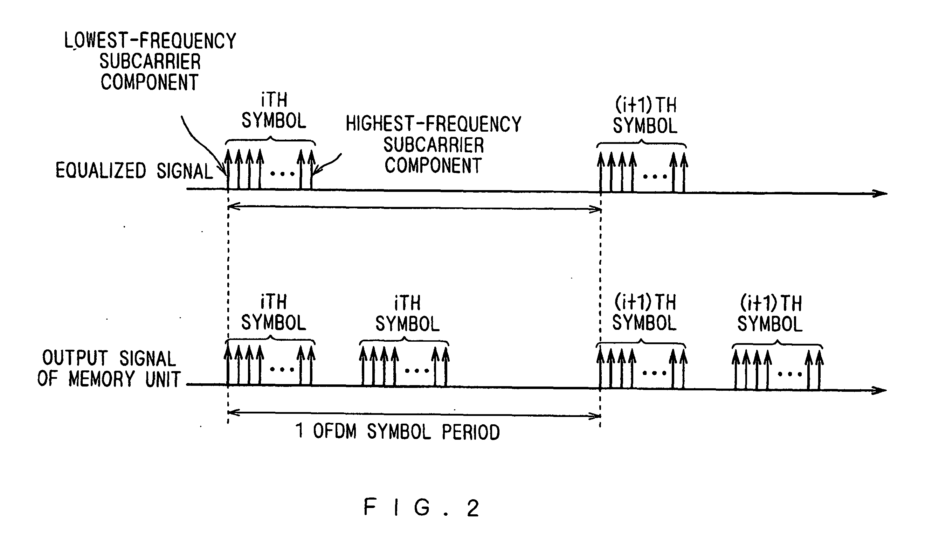

The memory unit 5 inputs the equalized signal that is output from the equalization unit 3 and the timing signal that is output from the timing generation unit 4 and repeatedly outputs such an equalized signal as illustrated in FIG. 2 two times. FIG. 2 illustrates the output signals of both the equalization unit 3 and the memory unit 5 to describe the operation of the memory unit 5. The memory unit 5 may be composed of, for example, a data storage unit for temporarily storing equalized output and a memory controller.

The filtering unit 6 inputs an equalized signal that is repeatedly output from the memory unit 5 and filters the signal, using a coefficient that is output from the coefficient update unit 7, for output. The filtering unit 6 may, for example, be an M-tap FIR (Finite Impulse Response) filter. Since the filtering unit 6 repeatedly receives an input signal, each single OFDM symbol in the present preferred embodiment is filtered two times. At this time, from among all the outputs from the filtering unit 6, the one that is computed during the last filtering operation is used as a demodulated signal; in the present preferred embodiment, the second filtering operation corresponds to the last filtering operation.

The coefficient update unit 7 inputs the output of the memory unit 5, the output of the filtering unit 6, and a known pilot carrier and successively updates a filter coefficient using an adaptive algorithm such as those of the steepest descent method or the recursive least-squares method, etc. In the case of using the steepest-descent method, the formula for successively updating the filter coefficient is expressed by Equation 1. In Equation 1, $W_m(n)$ represents the filter coefficient for the mth tap, $X^*_m(n)$ represents the complex conjugate of an input signal for the mth tap, and $\mu$ represents the weight coefficient (hereinafter also referred to as a "step-size parameter") at the time of updating the filter coefficient.

### Equation 1

$$W_m(n+1) = W_m(n) - \mu E(n) X^{\bullet}_m(n)$$

In Equation 1, E(n) represents an error signal that is expressed by a difference between the filter output and the known pilot carrier and that is given by Equation 2. In Equation 2, Y(n) represents the filter output for the pilot carrier, and R(n) represents a known signal for the pilot carrier.

### Equation 2

$$E(n) = Y(n) - R(n)$$

In Equations 1 and 2, "n" represents the number of times that the filter coefficient is updated. The updating of the filter coefficient is performed only when the filter output is a pilot carrier component. In the filter, however, all subcarriers are input. For example, let k be the number of subcarriers, the 0th subcarrier be the one that has the lowest frequency, and the (k-1)th subcarrier be the one that has the highest frequency. If the number of taps in the filter is M, the filter output, Y(n), that is used for the nth updating of the filter coefficient is expressed by Equation 3.

### Equation 3

$$Y(n) = \sum_{m=0}^{M-1} W_m(n) X_m(n)$$

In Equation 3, Y(n) represents the filter output that corresponds to a pilot carrier. An error signal E(n) is computed from Y(n) according to Equation 2 and the filter coefficient is updated according to Equation 1.

From among the OFDM signals that are repeatedly output from the memory unit 5, the pilot carrier of the first OFDM signal is used to update the filter coefficient. The initial value of the filter coefficient is set, for example, such that only the real part of the complex coefficient for the center tap of the filter is set to 1 and the other part is set to 0. The updating of the filter coefficient is ended when the input of the first signal is completed; the updated filter coefficient is output as a fixed value for the second signal. The timing of such switching is determined based on the timing signal that is output from the timing generation unit 4.

The filtering unit 6 outputs, as a demodulated signal, the result of filtering of the last OFDM signal, from among those OFDM signals that are repeatedly input.

Alternatively, the number of repetitions of an OFDM signal that the memory unit 5 outputs may be three or more. For example when the number of repetitions is three, the updated value of the filter coefficient for the first OFDM signal is set as an initial value of the filter coefficient for the second OFDM signal. Similarly, when the number of repetitions is four, the filter coefficient is updated using the first to third OFDM signals.

As described above, the receiving apparatus and the receiving method thereof according to the first preferred embodiment of the present invention are configured such that filtering is performed on an equalized signal and the filter coefficient is optimized using a successive update algorithm in order to correct phase or amplitude errors that remain. This reduces the influence of possible channel estimation errors that may occur due to the receipt of signals when moving fast, thereby improving the receiving performance of the receiving apparatus.

Second Preferred Embodiment

While the first preferred embodiment describes the example where the weight coefficient is updated based on the outputs of the memory unit 5 and the filtering unit 6 and known pilot carriers, the present preferred embodiment describes an example where the weight coefficient is updated in consideration of the reliability of a pilot carrier that is used for updating the filter coefficient.

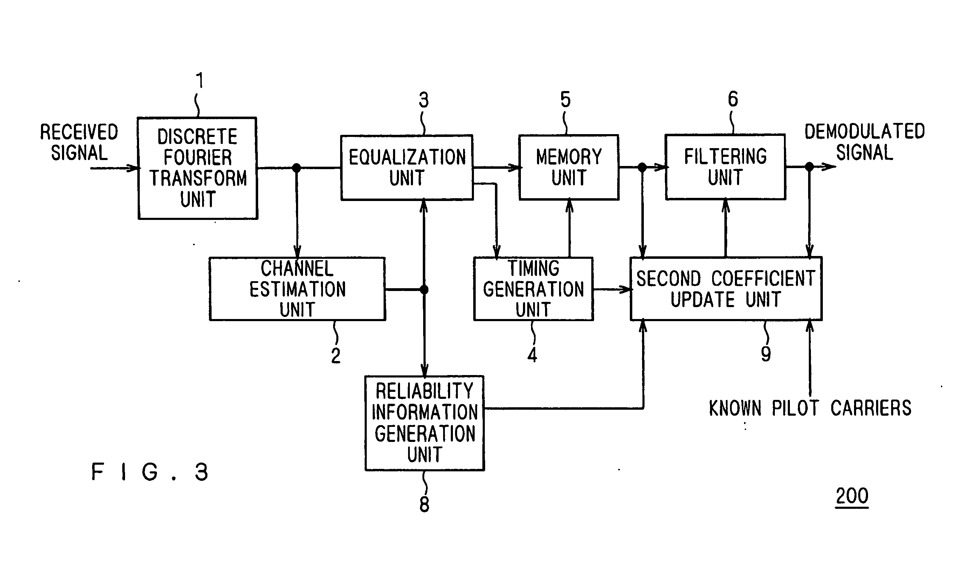

FIG. 3 illustrates a configuration of a receiving apparatus 200 according to a second preferred embodiment of the present invention. The receiving apparatus 200 is configured with, in addition to the components 1 to 6 similar to those described in the first preferred embodiment, a reliability-information generation unit 8 and a second coefficient update unit 9.

Now, the operation of the receiving apparatus 200 is described. Since the operations of the components 1 to 6 are similar to those described in the first preferred embodiment, the descriptions thereof are omitted herein. The reliability-information generation unit 8 extracts a channel estimated value for a pilot carrier from among those channel estimated values that are output from the channel estimation unit 2 and outputs the absolute value of or the square of the absolute value of a complex signal of the estimated value as reliability information on that pilot carrier. It can be determined that the greater the absolute value of or the square of the absolute value of the channel estimated value, the higher the reliability of the pilot carrier.

The second coefficient update unit 9, like the coefficient update unit 7, updates a filter coefficient using the outputs of the memory unit 5 and the filtering unit 6 and a known pilot carrier; however, before updating the filter coefficient, it determines whether or not that pilot carrier may be used for updating the filter coefficient, based on the reliability information on that pilot carrier that is intended to be used for updating the filter coefficient.

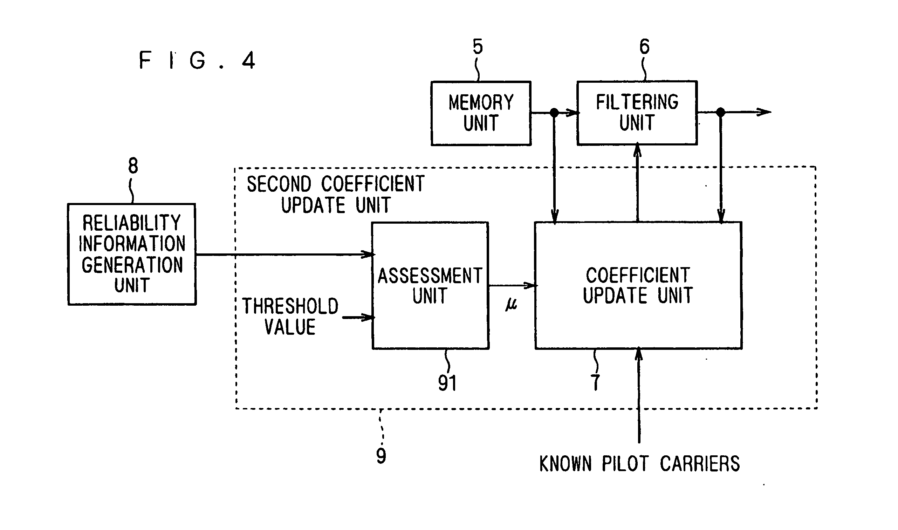

FIG. 4 illustrates a configuration of the second coefficient update unit 9 according to the present preferred embodiment. Now, an example of the configuration of the second coefficient update unit 9 is described with reference to FIG. 4. The coefficient update unit 7 is identical to that described in the first preferred embodiment. An assessment unit 91 makes a comparison between the output of the reliability-information generation unit 8 and a threshold value to assess whether or not the pilot carrier of interest may be used for updating the filter coefficient. For those pilot carriers that are determined as not being used for updating the filter coefficient, their step-size parameters are replaced by 0 to stop the updating of the filter coefficient. The aforementioned threshold value may be prescribed or may be obtained by averaging the outputs of the reliability-information generation unit 8 and dividing the average value by a given coefficient.

The above description illustrates the example where the step-size parameters of low-reliability pilot carriers are replaced by 0 so that those pilot carriers are not used for updating the filter coefficient. Alternatively, since the reliability information is a multi-level signal, the step-size parameter value may be altered according to signal size; for example, a higher reliability pilot carrier may have a greater step-size parameter value so that it is used for updating the filter coefficient.

As described above, the receiving apparatus and the receiving method thereof according to the second preferred embodiment of the present invention are configured to obtain the filter coefficient by controlling the step-size parameter that is used for updating the filter coefficient, based on the reliability of a pilot carrier that is used for updating the filter coefficient. This improves receiving performance on the move even in the case of a frequency selective fading channel.

Third Preferred Embodiment

While the first and second preferred embodiments describe examples where the filter coefficient after updating is certainly used for filtering, the present preferred embodiment shows an example where whether filtering is performed or not is determined after the effect of filtering is assessed.

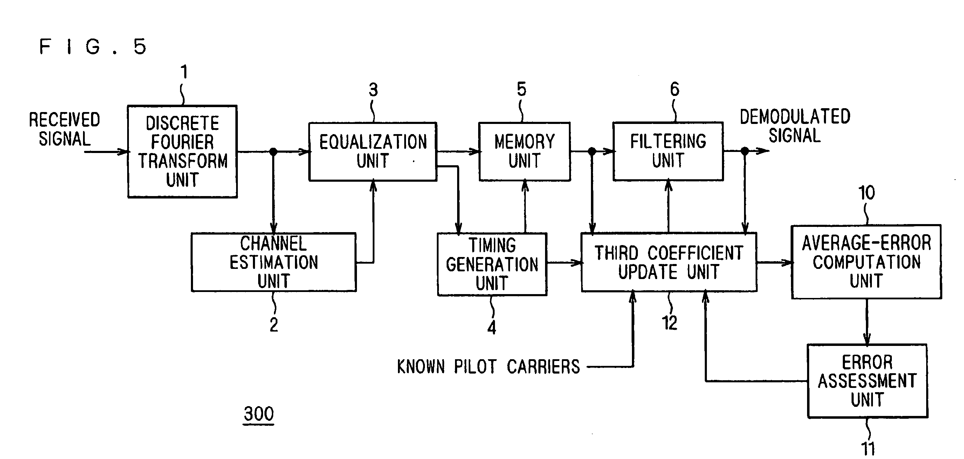

FIG. 5 illustrates a configuration of a receiving apparatus 300 according to a third preferred embodiment of the present invention. The receiving apparatus 300 is configured with, in addition to the components 1 to 6 similar to those described in the first preferred embodiment, an average-error computation unit 10, an error assessment unit 11, and a third coefficient update unit 12.

Now, the operation of the receiving apparatus 300 is described. Since the operations of the components 1 to 6 are similar to those described in the first preferred embodiment, the descriptions thereof are omitted herein. The average-error computation unit 10 inputs an error signal that is computed by the third coefficient update unit 12 and given by Equation 2 and computes, for each given frequency band, a root-mean-square value of or an average of absolute values of the error signals as an average error signal.

The error assessment unit 11 makes a comparison between an average error signal at the early stage of updating the filter coefficient and an average error signal at the final stage of updating the filter coefficient, from among the outputs of the average-error-signal computation unit 10, and assesses whether or not errors are reduced as a result of updating the filter coefficient.

The third coefficient update unit 12, like the coefficient update unit 7 described in the first preferred embodiment, updates the weight coefficient based on the outputs of the memory unit 5 and the filtering unit 6 and a known pilot carrier. However, the filter coefficient to be used for generating a demodulated signal is selected, based on the output of the error assessment unit 11, from either the filter coefficient after updating or the filter coefficient before updating. In other words, when errors are reduced as a result of updating the filter coefficient, the filter coefficient after updating is output to the filtering unit 6; otherwise, the initial value before updating the filter coefficient is output.

Alternatively, as in the second preferred embodiment, the receiving apparatus 300 may further include the reliability-information generation unit 8 and may update the filter coefficient while concurrently controlling the step-size parameter based on the reliability information.

As described above, the receiving apparatus and the receiving method thereof according to the third preferred embodiment of the present invention are configured to determine whether or not the filter coefficient, either before updating or after updating, is used after assessing the effect of updating the filter coefficient. This avoids performance degradation when an adaptive algorithm used for updating the filter coefficient diverges, thereby improving receiving performance on the move.

Industrial Applicability

One example of the use of the present invention is the application to a receiving apparatus that is used for digital terrestrial broadcasting using an orthogonal frequency division multiplexing scheme.

While the invention has been shown and described in detail, the foregoing description is in all aspects illustrative and not restrictive. It is therefore understood that numerous modifications and variations can be devised without departing from the scope of the invention.

**Claims**

1. An orthogonal frequency division multiplexed signal receiving apparatus for receiving an orthogonal frequency division multiplexed signal that includes a plurality of known pilot carriers, the apparatus comprising:

   a discrete Fourier transform unit (1) for transforming said orthogonal frequency division multiplexed signal that has been frequency-translated to a desired frequency, by a discrete Fourier transform, to separate the signal into a sequence of subcarriers and to output the sequence of subcarriers;
   a channel estimation unit (2) for inputting an output of said discrete Fourier transform unit (1) and estimating a channel characteristic for each of said subcarriers;
   an equalization unit (3) for inputting an output of said channel estimation unit (2) and the output of said discrete Fourier transform unit (1) and outputting an equalized signal that is obtained by equalizing the subcarriers and a header signal that is synchronized with a received symbol;
   a timing generation unit (4) for inputting an output of said equalization unit (3) and generating, based on said header signal, a timing signal that controls the timing of downstream signal processing;
   a memory unit (5) for inputting the output of said equalization unit (3) and an output of said timing generation unit (4), for temporarily storing the output of said equalization unit, and for repeatedly outputting the stored equalized signal n times, where n≥2;
   a filtering unit (6) for inputting an output of said memory unit (5), filtering n times said equalized signal based on a filter coefficient, and outputting a signal that is computed during the nth filtering operation as a separated signal; and
   a coefficient update unit (7) for successively computing a filter coefficient on the basis of the outputs of said filtering unit (6), said memory unit (5), and said timing generation unit (4) and said known pilot carriers, using an adaptive algorithm and updating said filter coefficient to a computed filter coefficient in said filtering unit (6), and a reliability-information generation unit (8) for inputting the output of said channel estimation unit (2) as a complex signal of a channel estimated value as said channel characteristic and computing from said complex signal an absolute value or a square of the absolute value thereof as reliability information for each pilot carrier from the output of said channel estimation unit (2);

wherein said coefficient update unit (7) is configured to successively compute a filter coefficient on the basis of said known pilot carriers and the outputs of said filtering unit (6), said memory unit (5), said timing generation unit (4), and said reliability-information generation unit (8), and to update said filter coefficient to the computed filter coefficient in said filtering unit (6).

2. The orthogonal frequency division multiplexed signal receiving apparatus according to claim 1, wherein said coefficient update unit (7) includes a reliability assessment unit (91) for assessing, based on the output of said reliability-information generation unit (8), the reliability of a pilot carrier that is output from said equalization unit (3); wherein if said reliability assessment unit (91) assesses that the pilot carrier has low reliability, said coefficient update unit is configured to not to update said filter coefficient in said filtering unit (6).

3. The orthogonal frequency division multiplexed signal receiving apparatus according to claim 1, wherein said coefficient update unit (7) is configured to control a weight coefficient that is used for updating a filter coefficient, according to said reliability information.

4. The orthogonal frequency division multiplexed signal receiving apparatus according to any one of claims 1 to 3, wherein
when the output of said filtering unit (6) is a pilot carrier component, said coefficient update unit is configured to successively update said filter coefficient based on the first to (n-1)th equalized signals from among those equalized signals that are repeatedly output n times-from said memory unit (5), and said filtering unit (6) is configured to filter the nth output equalized signal using the filter coefficient that is updated based on the (n-1)th equalized signal and to output the signal as said separated signal.

5. The orthogonal frequency division multiplexed signal receiving apparatus according to any one of claims 1 to 4, further comprising:

an average-error-signal computation unit (10) for computing, for each given frequency band, either a root-mean-square value of or an average of absolute values of error signals that are obtained as differences between the output of said filtering unit (6) and said known pilot carriers; and
an error assessment unit (11) for assessing, based on an output of said average-error-signal computation unit (10), whether the value of the output of said average-error-signal computation unit has decreased as a result of updating said filter coefficient,
wherein said coefficient update unit (7) is configured to select either the filter coefficient after updating or the filter coefficient before updating based on an assessment result of said error assessment unit (10) and to update said filter coefficient in said filtering unit (6).

6. An orthogonal frequency division multiplexed signal receiving method for receiving an orthogonal frequency division multiplexed signal that includes a plurality of known pilot carriers,
the method comprising the steps of:

(a) transforming said orthogonal frequency division multiplexed signal that has been frequency-translated to a desired frequency with a discrete Fourier transform to separate the signal into and to output a sequence of subcarriers;
(b) inputting an output of said step (a) and estimating a channel characteristic for each of said subcarriers;
(c) inputting the output of said step (a) and an output of said step (b) and outputting an equalized signal that is obtained by equalizing the subcarriers and a header signal that is synchronized with a received symbol;
(d) inputting an output of said step (c) and generating, based on said header signal, a timing signal that controls the timing of downstream signal processing;
(e) inputting and temporarily storing the output of said step (c) and an output of said step (d) and repeatedly outputting the stored equalized signal n times, where $n \geq 2$;
(f) inputting an output of said step (e), filtering n times said equalized signal based on a filter coefficient, and outputting a signal that is computed during the nth filtering as a separated signal;
(g) inputting the outputs of said steps (d), (e), and (f) and said known pilot carriers, successively computing a filter coefficient using an adaptive algorithm and updating said filter coefficient to a computed filter coefficient in said step (f),

(h) inputting the output of said step (b) as a complex signal of a channel estimated value as said channel characteristic and computing from said complex signal an absolute value or a square of the absolute value thereof as reliability information for each pilot carrier from the output of said step (b), wherein in said step (g) inputs the outputs of said steps (d), (e), (f), and (h) and said known pilot carriers, computes a filter coefficient and updates said filter coefficient to the computed filter coefficient in said step (f).

7. The orthogonal frequency division multiplexed signal receiving method according to claim 6, further comprising the steps of:

(i) computing, for each given frequency band, either a root-mean-square value of or an average of absolute values of error signals that are obtained as differences between the output of said step (f) and said known pilot carriers; and

(j) assessing, based on an output of said step (i), whether or not the value of the output of said step (i) has decreased as a result of updating said filter coefficient;

wherein in said step (g) selects either the filter coefficient after updating or the filter coefficient before updating is selected based on the result of assessment in said step (j) and updates said filter coefficient in said step (f).

**Patentansprüche**

1. Eine Orthogonalfrequenz-Multiplexsignal-Empfangsvorrichtung zum Empfang eines Orthogonalfrequenz-Multiplexsignals, das eine Vielzahl von bekannten Pilotträgern beinhaltet, wobei die Vorrichtung umfasst:

eine Diskret-Fourier-Transformationseinheit (1) zum Transformieren des Orthogonalfrequenz-Multiplexsignals, das in eine gewünschte Frequenz Frequenz-umgewandelt wurde, mittels einer Diskret-Fourier-Transformation, um das Signal in eine Folge von Unterträgern zu separieren und die Folge von Unterträgern auszugeben;
eine Kanalschätzeinheit (2) zum eingeben einer Ausgabe der Diskret-Fourier-Transformationseinheit (1) und Schätzen einer Kanal-Charakteristik für jeden der Unterträger;
eine Ausgleichseinheit (3) zum Eingeben einer Ausgabe der Kanalschätzeinheit (2) und der Ausgabe der Diskret-Fourier-Transformationseinheit (1) und Ausgeben eines ausgeglichenen Signals, das erhalten wird durch Ausgleichen der Unterträger und eines Kopfsignals, das mit einem empfangenen Symbol synchronisiert ist;
eine Takterzeugungseinheit (4) zum Eingeben einer Ausgabe der Ausgleichseinheit (3) und Erzeugen, basierend auf dem Kopfsignal, eines Taktsignals, das den Takt einer Downstream-Signalverarbeitung steuert;
eine Speichereinheit (5) zum Eingeben der Ausgabe der Ausgleichseinheit (3) und einer Ausgabe der Takterzeugungseinheit (4), zum vorübergehenden Speichern der Ausgabe der Ausgleichseinheit, und zum n-fachen, wiederholten Ausgeben des gespeicherten, ausgeglichenen Signals, wobei $n \geq 2$ ist;
eine Filtereinheit (6) zum Eingeben einer Ausgabe der Speichereinheit (5), zum n-fachen Filtern des ausgeglichenen Signals basierend auf einem Filterkoeffizienten und zum Ausgeben eines Signals, das während der n-ten Filteroperation als ein separiertes Signal berechnet wird; und
eine Koeffizienten-Aktualisierungseinheit (7) zum sukzessiven Berechnen eines Filterkoeffizienten auf der Basis der Ausgaben der Filtereinheit (6), der Speichereinheit (5) und der Takterzeugungseinheit (4) und der bekannten Pilotträger, unter Verwendung eines adaptiven Algorithmus und zum Aktualisieren des Filterkoeffizienten in der Filtereinheit (6) in einen berechneten Filterkoeffizienten, und
eine Reliabilitätsinformation-Erzeugungseinheit (8) zum Eingeben der Ausgabe der Kanalschätzeinheit (2) als ein komplexes Signal eines Kanal-geschätzten Wertes als die Kanal-Charakteristik und zum Berechnen, aus dem komplexen Signal, eines Absolutwertes oder eines Quadrates des Absolutwerts davon als Reliabilitätsinformation für jeden Pilotträger aus der Ausgabe der Kanalschätzeinheit (2);
wobei die Koeffizienten-Aktualisierungseinheit (7) eingerichtet ist, einen Filterkoeffizienten sukzessive auf der Basis der bekannten Pilotträger und der Ausgaben der Filtereinheit (6), der Speichereinheit (5), der Takterzeugungseinheit (4) und der Reliabilitätsinformations-Erzeugungseinheit (8) zu berechnen und den Filterkoeffizienten in der Filtereinheit (6) in einen berechneten Filterkoeffizienten zu aktualisieren.

2. Die Orthogonalfrequenz-Multiplexsignal-Empfangsvorrichtung nach Anspruch 1, wobei
die Koeffizienten-Aktualisierungseinheit (7) eine Reliabilitäts-Bewertungseinheit (91) beinhaltet zum Bewerten, basierend auf der Ausgabe der Rehabilitätsinformations-Erzeugungseinheit (8), der Reliabilität des Pilotträgers, der von der Ausgleichseinheit (3) ausgegeben wird;
wobei, wenn die Reliabilitäts-Bewertungseinheit (91) bewertet, dass der Pilotträger eine geringe Reliabilität aufweist, die Koeffizienten-Aktualisierungseinheit (7) eingerichtet ist, den Filterkoeffizienten in der Filtereinheit (6) nicht zu aktualisieren.

3. Die Orthogonalfrequenz-Multiplexsignal-Empfangsvorrichtung nach Anspruch 1, wobei die Koeffizienten-Aktualisierungseinheit (7) eingerichtet ist, einen gewichteten Koeffizienten zu steuern, der zum Aktualisieren eines Filterkoeffizienten gemäß der Reliabilitätsinformation verwendet wird.

4. Die Orthogonalfrequenz-Multiplexsignal-Empfangsvorrichtung nach einem der Ansprüche 1 bis 3, wobei wenn die Ausgabe der Filtereinheit (6) eine Pilotträgerkomponente ist, die Koeffizienten-Aktualisierungseinheit eingerichtet ist, den Filterkoeffizienten sukzessive zu aktualisieren basierend auf den ersten bis (n-1)-ten ausgeglichenen Signalen unter den ausgeglichenen Signalen, die n-fach wiederholt von der Speichereinheit (5) ausgegeben werden, und die Filtereinheit (6) eingerichtet ist, das n-te ausgegebene, ausgeglichene Signal unter Verwendung des Filterkoeffizienten zu filtern, der basierend auf dem (n-1)-ten ausgeglichenen Signal aktualisiert wird, und das Signal als das separierte Signal auszugeben.

5. Die Orthogonalfrequenz-Multiplexsignal-Empfangsvorrichtung nach einem der Ansprüche 1 bis 4, weiterhin umfassend:

   eine Durchschnitts-Fehler-Signalberechnungseinheit (10) zum Berechnen, für jedes gegebene Frequenzband, entweder eines quadratischen Mittelwerts von oder eines Durchschnitts von Absolutwerten der Fehlersignale, die als eine Differenz zwischen der Ausgabe der Filtereinheit (6) und den bekannten Pilotträgern erhalten wird; und eine Fehlerbewertungseinheit (11) zum Bewerten, basierend auf einer Ausgabe der Durchschnitts-Fehler-Signalberechnungseinheit (10), ob der Wert der Ausgabe der Durchschnitts-Fehler-Signalberechnungseinheit sich als Ergebnis einer Aktualisierung des Filterkoeffizienten verringert hat, wobei die Koeffizienten-Aktualisierungseinheit (7) eingerichtet ist, entweder den Filterkoeffizienten nach Aktualisierung oder den Filterkoeffizienten vor Aktualisierung auszuwählen basierend auf einem Bewertungsergebnis der Fehlerbewertungseinheit (10), und den Filterkoeffizienten in der Filtereinheit (6) zu aktualisieren.

6. Ein Orthogonalfrequenz-Multiplexsignal-Empfangsverfahren zum Empfangen eines Orthogorlalfrequenz-Multiplexsignals, das eine Vielzahl von bekannten Pilotträgern beinhaltet, wobei das Verfahren die Schritte umfasst:

   (a) Transformieren des Orthogonalfrequenz-Multiplexsignals, das in eine gewünschte Frequenz Frequenzumgewandelt wurde, mit einer Diskret-Fourier-Transformation, um das Signal in eine Folge von Unterträgern zu transformieren und auszugeben;
   (b) Eingeben einer Ausgabe des Schrittes (a) und Schätzen einer Kanal-Charakteristik für jeden Unterträger;
   (c) Eingeben der Ausgabe des Schrittes (a) und einer Ausgabe des Schritts (b) und Ausgeben eines ausgeglichenen Signals, das durch Ausgleichen der Unterträger und eines Kopfsignals, das mit einem empfangenen Symbol synchronisiert ist, erhalten wird;
   (d) Eingeben einer Ausgabe des Schritts (c) und Erzeugen, basierend auf dem Kopfsignal, eines Taktsignals, das den Takt einer Downstream-Signalverarbeitung steuert;
   (e) Eingeben und vorübergehendes Speichern der Ausgabe des Schritts (c) und einer Ausgabe des Schritts (d) und n-faches wiederholtes Ausgeben des gespeicherten, ausgeglichenen Signals, wobei n ≥ 2 ist;
   (f) Eingeben einer Ausgabe des Schritts (e), n-faches Filtern des ausgeglichenen Signals basierend auf einem Filterkoeffizienten, und Ausgeben eines Signals, das während des n-fachen Filterns berechnet wird, als ein separiertes Signal;
   (g) Eingeben der Ausgaben der Schritte (d), (e), und (f) und der bekannten Pilotträger, sukzessives Berechnen eines Filterkoeffizienten unter Verwendung eines adaptiven Algorithmus und Aktualisieren des Filterkoeffizienten in dem Schritt (f) in einem berechneten Filterkoeffizienten,
   (h) Eingeben der Ausgabe des Schritts (b) als ein komplexes Signal eines Kanalschätzwertes als die Kanal-Charakteristik und Berechnen, aus dem komplexen Signal, eines Absolutwertes oder eines Quadrates des Absolutwertes davon als Reliabilitätsinformation für jeden Pilotträger aus der Ausgabe des Schritts (b), wobei Schritt (g) die Ausgaben der Schritte (d), (e), (f) und (h) und die bekannten Pilotträger eingibt, einen Filterkoeffizient berechnet und den Filterkoeffizienten im Schritt (f) in den berechneten Filterkoeffizienten aktualisiert.

7. Das Orthogonalfrequenz-Multiplexsignal-Empfangsverfahren nach Anspruch 6, weiterhin die Schritte umfassend:

   (i) Berechnen, für jedes gegebene Frequenzband, entweder eines quadratischen Mittelwertes von oder eines Durchschnitts von Absolutwerten von Fehlersignalen, die als Differenzen zwischen der Ausgabe des Schritts (f) und der bekannten Pilotträger erhalten werden; und

(j) Bewerten, basierend auf einer Ausgabe des Schritts (i), ob der Wert der Ausgabe des Schritts (i) sich als Ergebnis einer Aktualisierung des Filterkoeffizienten verringert hat oder nicht;

wobei im Schritt (g) entweder der Filterkoeffizient nach Aktualisierung oder der Filterkoeffizient vor Aktualisierung basierend auf dem Ergebnis einer Bewertung im Schritt (j) ausgewählt wird und den Filterkoeffizient im Schritt (f) aktualisiert.

**Revendications**

1. Appareil de réception de signal multiplexé par répartition orthogonale de fréquence pour recevoir un signal multiplexé par répartition orthogonale de fréquence qui comprend une pluralité de porteuses pilotes connues, l'appareil comprenant :

   une unité de transformée de Fourier discrète (1) pour transformer ledit signal multiplexé par répartition orthogonale de fréquence qui a subi une transposition de fréquence en une fréquence souhaitée, par une transformée de Fourier discrète, afin de séparer le signal en une séquence de sous-porteuses et de sortir la séquence de sous-porteuses ;

   une unité d'estimation de voie (2) pour entrer une sortie de ladite unité de transformée de Fourier discrète (1) et estimer une caractéristique de voie pour chacune desdites sous-porteuses ;

   une unité d'égalisation (3) pour entrer une sortie de ladite unité d'estimation de voie (2) et la sortie de ladite unité de transformée de Fourier discrète (1) et sortir un signal égalisé qui est obtenu en égalisant les sous-porteuses et un signal d'en-tête qui est synchronisé avec un symbole reçu ;

   une unité de génération de cadencement (4) pour entrer une sortie de ladite unité d'égalisation (3) et générer, sur la base dudit signal d'en-tête, un signal de cadencement qui contrôle le cadencement du traitement de signal aval ;

   une unité de mémoire (5) pour entrer la sortie de ladite unité d'égalisation (3) et une sortie de ladite unité de génération de cadencement (4), pour stocker temporairement la sortie de ladite unité d'égalisation, et pour sortir de façon répétée le signal égalisé stocké n fois, où $n \geq 2$ ;

   une unité de filtrage (6) pour entrer une sortie de ladite unité de mémoire (5), filtrer n fois ledit signal égalisé sur la base d'un coefficient de filtre, et sortir un signal qui est calculé pendant la nième opération de filtrage comme un signal séparé ; et

   une unité de mise à jour de coefficient (7) pour calculer successivement un coefficient de filtre sur la base des sorties de ladite unité de filtrage (6), de ladite unité de mémoire (5), et de ladite unité de génération de cadencement (4) et desdites porteuses pilotes reçues, utiliser un algorithme adaptatif et mettre à jour ledit coefficient de filtre en un coefficient de filtre calculé dans ladite unité de filtrage (6), et

   une unité de génération d'information de fiabilité (8) pour entrer la sortie de ladite unité d'estimation de voie (2) comme un signal complexe d'une valeur de voie estimée comme ladite caractéristique de voie et calculer à partir dudit signal complexe une valeur absolue ou un carré de sa valeur absolue comme information de fiabilité pour chaque porteuse pilote depuis la sortie de ladite unité d'estimation de voie (2) ;

   dans lequel ladite unité de mise à jour de coefficient (7) est configurée pour calculer successivement un coefficient de filtre sur la base desdites porteuses pilotes connues et des sorties de ladite unité de filtrage (6), de ladite unité de mémoire (5), de ladite unité de génération de cadencement (4), et de ladite unité de génération d'information de fiabilité (8), et pour mettre à jour ledit coefficient de filtre en le coefficient de filtre calculé dans ladite unité de filtrage (6).

2. Appareil de réception de signal multiplexé par répartition orthogonale de fréquence selon la revendication 1, dans lequel

   ladite unité de mise à jour de coefficient (7) comprend une unité d'évaluation de la fiabilité (91) pour évaluer, sur la base de la sortie de ladite unité de génération d'information de fiabilité (8), la fiabilité d'une porteuse pilote qui est sortie de ladite unité d'égalisation (3) ;

   dans lequel si ladite unité d'évaluation de la fiabilité (91) évalue que la porteuse pilote a une fiabilité faible, ladite unité de mise à jour de coefficient est configurée pour ne pas mettre à jour ledit coefficient de filtre dans ladite unité de filtrage (6).

3. Appareil de réception de signal multiplexé par répartition orthogonale de fréquence selon la revendication 1, dans lequel

ladite unité de mise à jour de coefficient (7) est configurée pour contrôler un coefficient de pondération qui est utilisé pour mettre à jour un coefficient de filtre, selon ladite information de fiabilité.

4. Appareil de réception de signal multiplexé par répartition orthogonale de fréquence selon l'une quelconque des revendications 1 à 3, dans lequel
lorsque la sortie de ladite unité de filtrage (6) est une composante de porteuse pilote, ladite unité de mise à jour de coefficient est configurée pour mettre à jour successivement ledit coefficient de filtre sur la base des premier au (n-1)ième signaux égalisés parmi ces signaux égalisés qui sont sortis de façon répétée n fois de ladite unité de mémoire (5), et
ladite unité de filtrage (6) est configurée pour filtrer le nième signal égalisé sorti en utilisant le coefficient de filtre qui est mis à jour sur la base du (n-1)ième signal égalisé et pour sortir le signal comme ledit signal séparé.

5. Appareil de réception de signal multiplexé par répartition orthogonale de fréquence selon l'une quelconque des revendications 1 à 4, comprenant en outre :

une unité de calcul de signal d'erreur moyen (10) pour calculer, pour chaque bande de fréquences donnée, soit une valeur quadratique moyenne de soit une moyenne de valeurs absolues de signaux d'erreur qui sont obtenus comme différences entre la sortie de ladite unité de filtrage (6) et lesdites porteuses pilotes connues ; et
une unité d'évaluation d'erreur (11) pour évaluer, sur la base d'une sortie de ladite unité de calcul de signal d'erreur moyen (10), si la valeur de la sortie de ladite unité de calcul de signal d'erreur moyen a diminué à la suite de la mise à jour dudit coefficient de filtre,
dans lequel ladite unité de mise à jour de coefficient (7) est configurée pour sélectionner soit le coefficient de filtre après la mise à jour soit le coefficient de filtre avant la mise à jour sur la base d'un résultat d'évaluation de ladite unité d'évaluation d'erreur (10) et pour mettre à jour ledit coefficient de filtre dans ladite unité de filtrage (6).

6. Procédé de réception de signal multiplexé par répartition orthogonale de fréquence pour recevoir un signal multiplexé par répartition orthogonale de fréquence qui comprend une pluralité de porteuses pilotes connues,
le procédé comprenant les étapes consistant à :

(a) transformer ledit signal multiplexé par répartition orthogonale de fréquence qui a subi une transposition de fréquence en une fréquence souhaitée avec une transformée de Fourier discrète afin de séparer le signal en et sortir une séquence de sous-porteuses ;
(b) entrer une sortie de ladite étape (a) et estimer une caractéristique de voie pour chacune desdites sous-porteuses ;
(c) entrer la sortie de ladite étape (a) et une sortie de ladite étape (b) et sortir un signal égalisé qui est obtenu en égalisant les sous-porteuses et un signal d'en-tête qui est synchronisé avec un symbole reçu ;
(d) entrer une sortie de ladite étape (c) et générer, sur la base dudit signal d'en-tête, un signal de cadencement qui contrôle le cadencement du traitement de signal aval ;
(e) entrer et stocker temporairement la sortie de ladite étape (c) et une sortie de ladite étape (d) et sortir de façon répétée le signal égalisé stocké n fois, où n≥2 ;
(f) entrer une sortie de ladite étape (e), filtrer n fois ledit signal égalisé sur la base d'un coefficient de filtre, et sortir un signal qui est calculé pendant le nième filtrage comme un signal séparé ;
(g) entrer les sorties desdites étapes (d), (e), et (f) et lesdites porteuses pilotes connues, calculer successivement un coefficient de filtre en utilisant un algorithme adaptatif et mettre à jour ledit coefficient de filtre en un coefficient de filtre calculé à ladite étape (f),
(h) entrer la sortie de ladite étape (b) comme un signal complexe d'une valeur de voie estimée comme ladite caractéristique de voie et calculer à partir dudit signal complexe une valeur absolue ou un carré de sa valeur absolue comme information de fiabilité pour chaque porteuse pilote depuis la sortie de ladite étape (b), où ladite étape (g) entre les sorties desdites étapes (d), (e), (f), et (h) et lesdites porteuses pilotes connues, calcule un coefficient de filtre et met à jour ledit coefficient de filtre en le coefficient de filtre calculé à ladite étape (f).

7. Procédé de réception de signal multiplexé par répartition orthogonale de fréquence selon la revendication 6, comprenant en outre les étapes consistant à :

(i) calculer, pour chaque bande de fréquences donnée, soit une valeur quadratique moyenne de soit une moyenne de valeurs absolues de signaux d'erreur qui sont obtenus comme différences entre la sortie de ladite étape (f) et lesdites porteuses pilotes connues ; et

(j) évaluer, sur la base d'une sortie de ladite étape (i), si la valeur de la sortie de ladite étape (i) a diminué ou non à la suite de la mise à jour dudit coefficient de filtre ;

dans lequel ladite étape (g) sélectionne soit le coefficient de filtre après la mise à jour soit le coefficient de filtre avant la mise à jour sur la base du résultat d'évaluation à ladite étape (j) et met à jour ledit coefficient de filtre à ladite étape (f).

F I G . 1

EP 2 159 980 B1

LOWEST-FREQUENCY
SUBCARRIER
COMPONENT

iTH
SYMBOL

HIGHEST-FREQUENCY
SUBCARRIER
COMPONENT

(i+1)TH
SYMBOL

EQUALIZED SIGNAL

iTH
SYMBOL

iTH
SYMBOL

(i+1)TH
SYMBOL

(i+1)TH
SYMBOL

OUTPUT SIGNAL
OF MEMORY UNIT

1 OFDM SYMBOL PERIOD

F I G . 2

FIG. 3

EP 2 159 980 B1

EP 2 159 980 B1

FIG. 5

EP 2 159 980 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000236313 A

- US 20020196880 A1

**Non-patent literature cited in the description**

- **Itami ; Makoto.** Easy-to-Understand OFDM Technology. Ohmsha, Ltd, 39-4471-82